# EUROPEAN PATENT SPECIFICATION

(11) **EP 2 871 852 B1**
(45) Date of publication and mention of the grant of the patent: **04.10.2017**
(21) Application number: 14191444.0
(22) Date of filing: 03.11.2014
(51) Int. Cl.: H04Q 9/00, A63B 71/00, G04G 5/00

(54) **MEASUREMENT INFORMATION MANAGEMENT SYSTEM, MEASUREMENT DEVICE, MEASUREMENT INFORMATION MANAGEMENT METHOD, AND MEASUREMENT INFORMATION MANAGEMENT PROGRAM**
MESSINFORMATIONSVERWALTUNGSSYSTEM, MESSVORRICHTUNG, MESSINFORMATIONSVERWALTUNGSVERFAHREN UND MESSINFORMATIONSVERWALTUNGSPROGRAMM
SYSTÈME DE GESTION D'INFORMATIONS DE MESURE, DISPOSITIF DE MESURE, PROCÉDÉ ET PROGRAMME DE GESTION D'INFORMATIONS DE MESURE

(30) Priority: 05.11.2013 JP 2013229585
(43) Date of publication of application: 13.05.2015
(73) Proprietor: Seiko Epson Corporation, Tokyo 163-0811 (JP)
(72) Inventor: Hirabayashi, Shinji, Nagano, 392-8502 (JP)
(74) Representative: Hoffmann Eitle

(56) References cited:
- US-A1- 2003 236 100
- US-A1- 2007 083 778
- US-A1- 2007 121 153

## Description

### BACKGROUND

### 1. Technical Field

The present invention relates to a measurement information management system which manages information measured by a measurement device, a measurement device, a measurement information management method, and a measurement information management program.

### 2. Related Art

In the related art, for example, an electronic watch which includes a global positioning system (GPS) sensor and can perform measurement of position information, has been known (for example, see JP-A-2008-9666).

The electronic watch disclosed in JP-A-2008-9666 is held in a relay device at the time of charging. By connecting the relay device to an information device such as a personal computer (PC) through a connection cable in this state, it is possible to transfer various information items between the electronic watch and the information device.

However, the electronic watch including the GPS sensor can measure position information (latitude and longitude) and time information. Accordingly, in a case where a user runs or walks wearing the electronic watch, for example, it is possible to generate measurement data items such as time information such as measurement starting time, running time, or elapsed time, a movement distance, a movement speed, time, or calorie consumption, based on the time information or position information measured by the electronic watch, and to record the measurement data items in a storage unit. In order to store and manage the measurement data items recorded in the electronic watch and use the stored data items, the measurement data items stored in the electronic watch are transmitted (data transfer) to the information device such as a PC from the electronic watch.

Meanwhile, it is desirable to use wireless communication for the communication between the electronic watch and the information device, from a viewpoint of convenience. In addition, since the electronic watch is driven by a battery, it is desirable to lower power consumption. Accordingly, a low-power wireless communication technology such as Bluetooth low energy (BLE) as one standard of Bluetooth (trademark) which can lower power consumption, is required to be used in the communication between the electronic watch and the information device.

However, since the position information is measured every second, for example, a data volume increases. In a case where the low-power wireless communication technology is used in the electronic watch, a communication speed decreases, and accordingly, a longer time is taken until the data transfer from the electronic watch to the information device is completed. Since it is difficult to display the measurement data being transferred and a process result based on this measurement data on a display unit of the information device until the data transfer is completed, it is difficult for a user to immediately check the measurement data or the process result, when the time of the data transfer becomes longer. In addition, in a case of performing near field wireless communication such as the BLE being continued for a long time, it is necessary to pay attention to a distance between the electronic watch and the information device not becoming longer. Further, there is also a possibility of disconnection due to an effect of external noise or erroneous disconnection operation during the communication. As described above, the continuation of the communication for a long time may cause inconvenient problems for a user.

US 2003/236100 A1 relates to a data transfer system between a wrist watch and an immobile station. In this data transfer system a measurement device in the form of a mobile station (wristwatch which is wore by a living organism) transmits signals containing information relating to the living activity of the living organism. The information device formed by an immobile station receives the signals from the mobile station and the immobile station transmits a start signal to the mobile station in order to request the mobile station to start a data transfer. The mobile station, in response to the start signal, transmits the signals containing the information after receiving the start signal.

### SUMMARY

An advantage of some aspects of the invention is to provide a measurement information management system, a measurement device, a measurement information management method, and a measurement information management program which can improve convenience.

An aspect of the invention is directed to a measurement information management system including: a measurement device; and an information device which performs wireless communication with the measurement device, in which the measurement device includes a storage unit, a clock unit which measures the time, a measurement unit which measures at least position information, a detail information generation unit which generates detail information including at least the position information, a storage control unit which stores the detail information in the storage unit, a title information generation unit which generates title information for identifying the detail information, a title information transmission unit which transmits the title information to the information device, and a detail information transmission unit which transmits the detail information to the information device according to a transmission request signal transmitted from the information device, and the information device includes a transfer time calculation unit which calculates an estimated transfer time necessary for transmitting the detail information corresponding to the title information transmitted from the measurement device, from the measurement device to the information device, a transfer time determination unit which determines whether or not the estimated transfer time is shorter than a predetermined threshold value set in advance, and a detail information request unit which transmits a transmission request signal of the detail information of which the estimated transfer time is determined to be shorter than the predetermined threshold value by the transfer time determination unit, to the measurement device.

According to the aspect of the invention, the detail information generation unit generates the detail information including at least the position information of a current location (for example, latitude and longitude) measured by the measurement unit such as a GPS sensor or the like. The storage control unit stores the detail information in the storage unit. The title information generation unit generates the title information for identifying the detail information.

For example, when the transmission request signal of the title information transmitted from the information device is received, the title information transmission unit transmits the title information to the information device. When the information device receives the title information, the transfer time calculation unit calculates the estimated transfer time necessary for transmitting the detail information corresponding to the received title information from the measurement device to the information device. The transfer time determination unit determines whether or not the estimated transfer time is shorter than the predetermined threshold value set in advance. The detail information request unit transmits the transmission request signal of the corresponding detail information to the measurement device, when the estimated transfer time is determined to be shorter than the predetermined threshold value by the transfer time determination unit. When the measurement device receives the transmission request signal, the detail information transmission unit transmits the detail information which is requested to be transmitted to the information device.

According to this, the detail information of which the estimated transfer time is determined to be shorter than the predetermined threshold value is automatically transmitted from the measurement device to the information device, even without the operation of the information device or the execution of the transfer process of the detail information by a user. Therefore, it is possible to simplify the operation performed by a user and to improve convenience.

In addition, since the detail information of which the estimated transfer time is determined to be equal to or greater than the predetermined threshold value is not automatically transmitted, it is possible to regulate an upper limit of the transfer time. Also with this point of view, it is possible to improve convenience.

In the measurement information management system according to the aspect of the invention, it is preferable that the transfer time calculation unit calculates the estimated transfer time based on data volume of the detail information and a communication speed set in advance.

According to this configuration, it is possible to calculate the estimated transfer time without measuring a measurement value of a communication speed, for example, in order to calculate the estimated transfer time.

In the measurement information management system according to the aspect of the invention, it is preferable that the transfer time calculation unit calculates the estimated transfer time based on data volume of the detail information and a communication speed measured when the title information is transmitted from the measurement device to the information device.

According to this configuration, it is possible to calculate the estimated transfer time based on the measurement value of the communication speed.

Another aspect of the invention is directed to a measurement information management system including: a measurement device; an information device which performs wireless communication with the measurement device; and a server which communicates with the information device, in which measurement device includes a storage unit, a clock unit which measures the time, a measurement unit which measures at least position information, a detail information generation unit which generates detail information including at least the position information, a storage control unit which stores the detail information in the storage unit, a title information generation unit which generates title information for identifying the detail information, a title information transmission unit which transmits the title information to the information device, and a detail information transmission unit which transmits the detail information to the information device according to a transmission request signal transmitted from the information device, and the information device includes a transfer time calculation unit which calculates an estimated transfer time necessary for transferring the detail information corresponding to the title information transmitted from the measurement device, from the measurement device to the server through the information device, a transfer time determination unit which determines whether or not the estimated transfer time is shorter than a predetermined threshold value set in advance, a detail information request unit which transmits a transmission request signal of the detail information of which the estimated transfer time is determined to be shorter than the predetermined threshold value by the transfer time determination unit, to the measurement device, and a detail information transfer unit which transfers the detail information transmitted from the measurement device to the server.

According to the aspect of the invention, the detail information generation unit generates the detail information including at least the position information of a current location measured by the measurement device. The storage control unit stores the detail information in the storage unit. The title information generation unit generates the title information for identifying the detail information.

For example, when the transmission request signal of the title information transmitted from the information device is received, the title information transmission unit transmits the title information to the information device. When the information device receives the title information, the transfer time calculation unit calculates the estimated transfer time necessary for transferring the detail information corresponding to the title information received from the measurement device, from the measurement device to the server through the information device.

The transfer time determination unit determines whether or not the estimated transfer time is shorter than the predetermined threshold value set in advance. The detail information request unit transmits the reception request signal of the detail information of which the estimated transfer time is determined to be shorter than the predetermined threshold value by the transfer time determination unit, to the measurement device. When the measurement device receives the transmission request signal, the detail information transmission unit transmits the detail information which is requested to be transmitted to the information device. When the information device receives the detail information, the detail information transfer unit transfers the received detail information to the server.

According to this, the detail information of which the estimated transfer time is determined to be shorter than the predetermined threshold value is automatically transferred from the measurement device to the server through the information device, even without the operation of the information device or the execution of the transfer process of the detail information by a user. Therefore, it is possible to simplify the operation performed by a user and to improve convenience.

In addition, since the detail information of which the estimated transfer time is determined to be equal to or greater than the predetermined threshold value is not automatically transferred, it is possible to regulate an upper limit of the transfer time. Also with this point of view, it is possible to improve convenience.

In addition, since the detail information is transferred to the server, it is possible to manage the detail information in the server. By doing so, it is possible to generate and analyze various information items based on the detail information in the server. That is, it is possible to use the data stored in the server. In addition, since it is possible to store the measurement information items in the server, it is possible to avoid capacity of the storage unit of the information device being occupied by the measurement information. Further, it is possible to browse the information items with other devices or to share the information items with other users, by accessing the server.

In the measurement information management system according to the aspect of the invention, it is preferable that the transfer time calculation unit calculates the estimated transfer time based on a communication speed set in advance.

According to this configuration, it is possible to calculate the estimated transfer time without measuring a measurement value of a communication speed, for example, in order to calculate the estimated transfer time.

In the measurement information management system according to the aspect of the invention, it is preferable that the transfer time calculation unit calculates the estimated transfer time based on a measurement value of a communication speed.

According to this configuration, it is possible to calculate the estimated transfer time based on the measurement value of the communication speed.

In the measurement information management system according to the aspect of the invention, it is preferable that the information device includes a display unit, a display control unit which displays the title information transmitted from the measurement device on the display unit, and an input unit which determines that a selection operation and a transfer operation of the title information to be a transfer target from the title information items displayed on the display unit are performed and outputs an operation signal, and the detail information request unit transmits the transmission request signal of the detail information corresponding to the title information selected according to the operation signal output by the input unit, to the measurement device.

According to this configuration, the display control unit displays the title information received from the measurement device on the display unit. Herein, an icon indicating that transfer has already been completed may be displayed, for example, with respect to the title information of which the transfer of the corresponding detail information has already been completed. Therefore, a user can identify the detail information which is not requested to be transferred, among the detail information items generated by the measurement device, by browsing the display unit.

When a user operates the input unit and performs the selection operation and the transfer operation of the title information to be a transfer target among the title information items displayed on the display unit, the input unit determines this operation and outputs an operation signal. Then, the detail information request unit transmits the transmission request signal of the detail information corresponding to the title information selected according to the operation signal, to the measurement device. When the measurement device receives the transmission request signal, the detail information transmission unit transmits the detail information requested to be transmitted, to the information device.

Regarding the detail information of which the estimated transfer time is determined to be greater than the predetermined threshold value and the transfer process is not automatically started, the transfer process can be executed by browsing and selecting the title information displayed on the display unit by a user and performing the transfer operation.

In the measurement information management system according to the aspect of the invention, it is preferable that the measurement device includes a measurement device side input unit which determines that the start operation and the completion operation of the measurement are performed and outputs a measurement start signal and a measurement completion signal to the measurement unit, the detail information generation unit generates one detail information item including at least the position information measured by the measurement unit from a time point when the measurement start signal is output to a time point when the measurement completion signal is output, and time information which is the time when the position information is measured, and the title information generation unit generates title information including elapsed time from a time point when the measurement start signal is output to a time point when the measurement completion signal is output, a movement distance of the measurement device, and date information of the time point when the measurement start signal or the measurement completion signal is output.

For example, in a case where a user runs or walks, the date information, the elapsed time, and the movement distance are information items which easily remain in the user's memory and are easily remembered by a user.

According to this configuration, since the date information, the elapsed time, and the movement distance are displayed on the display unit in a case of displaying the title information on the display unit of the information device, for example, a user can browse the information items and therefore can easily identify the detail information, compared to a case where only the number indicating the measurement order is displayed on the display unit as the title information, for example. By doing so, it is possible to easily perform the selection operation of the title information.

In the measurement information management system according to the aspect of the invention, it is preferable that the measurement device further includes a summary information generation unit which generates summary information representing a summary of the detail information, and a summary information transmission unit which transmits the summary information to the information device, the summary information includes the title information, the summary information generation unit includes the title information generation unit, and the summary information transmission unit includes a title information transmission unit.

According to this configuration, the summary information generation unit generates the summary information representing a summary of the detail information. The title information and another information item are included in this summary information. In a case where the measurement device is used in exercise such as running, for example, the other information item is calorie consumption or lap information. Since the generated summary information is transmitted to the information device by the summary information transmission unit, the other information item also can be displayed on the display unit of the information device, before the information device receives the detail information, for example. By doing so, a user can check the other information, before the detail information is transferred.

In the measurement information management system according to the aspect of the invention, it is preferable that the information device includes an input unit which determines that a setting operation of setting a threshold value is performed and outputs an operation signal, and a threshold value setting unit which sets a value of the predetermined threshold value according to the operation signal output by the input unit.

According to this configuration, a user can freely set a value of the predetermined threshold value by operating the input unit. Accordingly, a user can freely set the detail information for automatically starting the transfer process thereof, based on the estimated transfer time. Therefore, the transfer can be set to be automatically performed as much as possible or can be set to be manually performed as much as possible, and thus it is possible to respond to detailed requests of a user.

Still another aspect of the invention is directed to a measurement device which performs wireless communication with an information device, the measurement device including: a storage unit; a clock unit which measures the time; a measurement unit which measures at least position information; a detail information generation unit which generates detail information including at least the position information; a storage control unit which stores the detail information in the storage unit; a title information generation unit which generates title information for identifying the detail information; a title information transmission unit which transmits the title information to the information device; and a detail information transmission unit which transmits the detail information to the information device according to a transmission request signal, when the transmission request signal of the detail information of which the estimated transfer time necessary for transmitting the detail information from the measurement device to the information device is determined to be shorter than the predetermined threshold value set in advance is received.

Yet another aspect of the invention is directed to a measurement information management method of a measurement information management system including a measurement device including a storage unit, a clock unit which measures the time, and a measurement unit which measures at least position information, and an information device which performs wireless communication with the measurement device, the method including: generating detail information including at least the position information; storing the detail information in the storage unit; generating title information for identifying the detail information; transmitting the title information to the information device; calculating an estimated transfer time necessary for transmitting the detail information corresponding to the title information transmitted from the measurement device from the measurement device to the information device; determining whether or not the estimated transfer time is shorter than a predetermined threshold value set in advance; transmitting a transmission request signal of the detail information of which the estimated transfer time is determined to be shorter than the predetermined threshold value in the determining of the estimated transfer time, to the measurement device; and transmitting the detail information to the information device according to a transmission request signal transmitted from the information device.

Still yet another aspect of the invention is directed to a measurement information management program causing an information device which performs wireless communication with a measurement device including a clock unit which measures the time and a measurement unit which measures at least position information, to execute: calculating estimated transfer time necessary for transmitting detail information corresponding to title information from the measurement device to the information device, when the title information for identifying the detail information at least including the position information is received from the measurement device; determining whether or not the estimated transfer time is shorter than a predetermined threshold value set in advance; transmitting a transmission request signal of the detail information of which the estimated transfer time is determined to be shorter than the predetermined threshold value in the determining of the estimated transfer time, to the measurement device; and receiving the detail information requested in the transmitting of the transmission request signal, from the measurement device.

In the measurement device, the measurement information management method, and the measurement information management program according to the aspects of the invention, it is possible to improve convenience of measurement device, the measurement information management method, and the measurement information management program, in the same manner as in the measurement information management system.

### BRIEF DESCRIPTION OF THE DRAWINGS

The invention will be described with reference to the accompanying drawings, wherein like numbers reference like elements.
Fig. 1 is a block diagram showing a configuration of a measurement information management system according to a first embodiment.
Fig. 2 is a schematic view showing an appearance of a measurement device according to the embodiment of the invention.
Fig. 3 is a diagram showing an example of a summary information list screen according to the embodiment of the invention.
Fig. 4 is a diagram showing an example of a detail screen according to the embodiment of the invention.
Fig. 5 is a flowchart showing a measurement process executed by a measurement device.
Fig. 6 is a flowchart showing a transfer process of measurement information executed by a measurement information management system.
Fig. 7 is a flowchart showing a transfer process of measurement information executed by a measurement information management system.
Fig. 8 is a diagram showing an example of a home screen according to the embodiment of the invention.
Fig. 9 is a diagram showing an example of an uploading screen according to the embodiment of the invention.
Fig. 10 is a block diagram showing a configuration of a measurement information management system according to a second embodiment.
Fig. 11 is a flowchart showing a transfer process of measurement information executed by a measurement information management system.
Fig. 12 is a flowchart showing a transfer process of measurement information executed by a measurement information management system.

### DESCRIPTION OF EXEMPLARY EMBODIMENTS

Hereinafter, embodiments of the invention will be described with reference to the drawings.

### First Embodiment

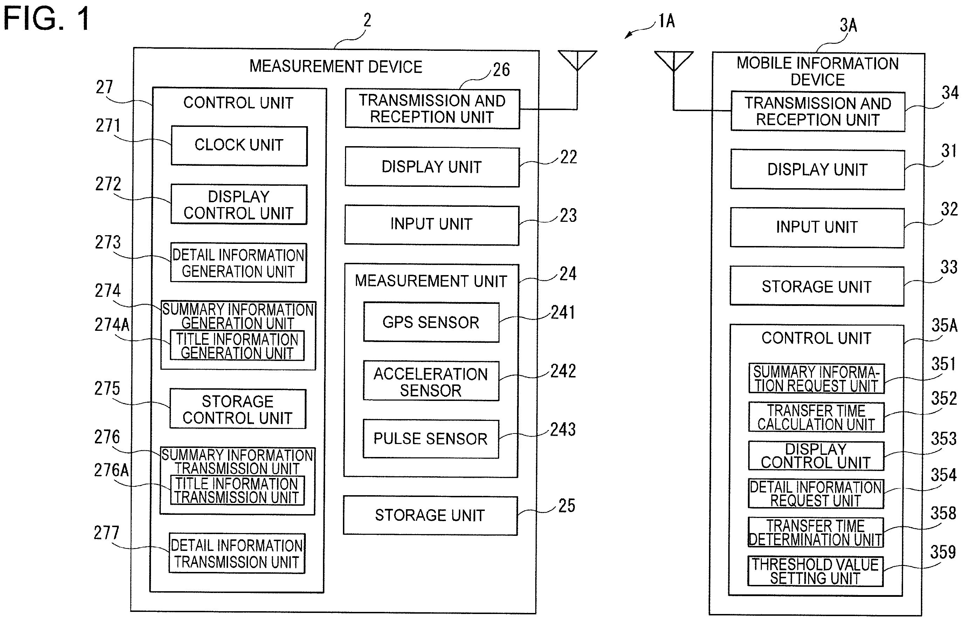

Fig. 1 is a block diagram showing a configuration of a measurement information management system 1A according to a first embodiment.

As shown in Fig. 1, the measurement information management system 1A includes a measurement device 2 and a mobile information device 3A. The measurement device 2 is a device in a shape of a watch, is worn on a user, and measures measurement values such as time information such as measurement starting time, running time, or elapsed time, position information (latitude and longitude) of a current location (that is, current location of a user), a movement distance, a movement speed, time, or calorie consumption of a user, pulse rate information or heart rate information of a user, or the like. The mobile information device 3A is, for example, a portable mobile type information device such as a mobile phone, a smart phone (multifunctional mobile phone), or a tablet. In the embodiment, a smart phone is used for the mobile information device 3A. Wireless communication is performed between the measurement device 2 and the mobile information device 3A, and the mobile information device 3A receives measurement information measured by the measurement device 2.

### Configuration of Measurement Information

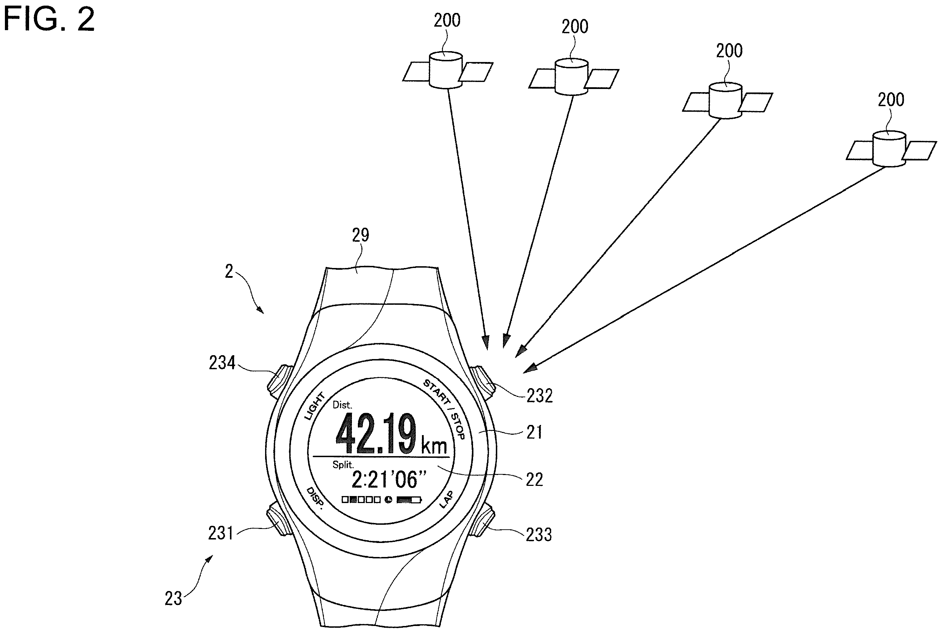

Fig. 2 is a schematic view showing an appearance of the measurement device 2.

The measurement device 2 includes a case 21 having a watch-shaped appearance, and a watchband 29 for the case 21 to be worn on a wrist of a user is provided on the case 21. In addition, the measurement device 2 includes a display unit 22, and an input unit 23 including buttons 231 to 234.

Further, as shown in Fig. 1, the measurement device 2 includes a measurement unit 24, a storage unit 25, a transmission and reception unit 26, and a control unit 27.

The display unit 22 is configured with a display panel such as a liquid crystal panel, an organic electro-luminescence (EL) panel, or an electrophoretic panel, and is provided on a front surface of the case 21. The measurement results such as the elapsed time or the movement distance are displayed on the display unit 22, by the control performed by the control unit 27 which will be described later.

The input unit 23 (measurement device side input unit) is configured to include four buttons 231 to 234 provided on an outer periphery of the case 21, and an operation signal corresponding to the buttons pressed down by a user is output to the control unit 27.

When the button 231 is pressed down, a process of switching a screen displayed on the display unit 22 to any one of a menu screen, a measurement screen, and a setting screen is executed. When the button 232 is pressed down in a state where the measurement screen is displayed, start, completion, and restart processes of the measurement are executed. When the button 233 is pressed down, a lap measurement process is executed when the measurement is performed, and a resetting process is executed when the measurement is stopped. When the button 234 is pressed down, a light for illuminating the display unit 22 is turned on.

The measurement unit 24 includes a GPS sensor 241, an acceleration sensor 242, and a pulse sensor 243, and outputs measurement signals of the sensors 241 to 243 to the control unit 27.

The GPS sensor 241 receives a GPS signal (satellite signal) from at least three GPS satellites 200 among a plurality of GPS satellites 200 (Fig. 2) going around satellites' orbits of the Earth, and calculates and acquires the position information showing the current location of the measurement device 2 (that is, current location of a user). In addition, it is possible to calculate and acquire not only the position information of the current location but also an altitude of the current location, by receiving the GPS signal from four or more GPS satellites 200.

The acceleration sensor 242 measures acceleration accompanying the movement of the measurement device 2.

The pulse sensor 243 is provided on a rear surface of the case 21, and comes in contact with a wrist of a user to measure a pulse rate of a user. In addition, in a case where it is difficult to embed the pulse sensor 243 in the case 21, a heart rate sensor may be used. The heart rate sensor is, for example, configured with a component independent from the case 21, and is worn by and comes in contact with a chest of a user to measure a heart rate of a user. Alternatively, both of the pulse sensor 243 and the heart rate sensor may be used.

The storage unit 25 is configured with a flash memory or the like, and stores various programs or information items (date of birth, gender, or physical information of a user) necessary for the measurement. In addition, the storage unit 25 stores detail information and summary information which will be described later and are generated based on the information measured by the measurement unit 24.

The transmission and reception unit 26 is a communication module which performs wireless communication with the external device such as the mobile information device 3A. The transmission and reception unit 26 transmits information input from the control unit 27 to the external device in which the communication connection is established, and also outputs the information received from the external device to the control unit 27.

In the embodiment, a module which is driven with low power is used for the transmission and reception unit 26. As an example of the transmission and reception unit 26 described above, a module supporting Bluetooth low energy (BLE) as one standard of Bluetooth (trademark) can be used. For example, in a case where BLE is introduced to the watch type measurement device 2, the communication speed in BLE may be approximately 10 kbps. This communication speed fluctuates depending on BLE introduction conditions in the measurement device 2 or the communication environment, but a long time is necessary for transmitting a large volume of data to the outside through the transmission and reception unit 26 and receiving (acquiring) the transmitted large volume of data in an external device.

The control unit 27 controls the operation of the measurement device 2, and is configured to include an operation device such as a central processing unit (CPU). As the CPU executes a program stored in the storage unit 25, the control unit 27 functions as a clock unit 271, a display control unit 272, a detail information generation unit 273, a summary information generation unit 274, a storage control unit 275, a summary information transmission unit 276, and a detail information transmission unit 277.

The clock unit 271 measures the current time with an oscillation signal (reference signal: 1 Hz) output by a crystal oscillator. In addition, the clock unit 271 corrects the current time with the time information acquired from the GPS signals.

The display control unit 272 controls an operation of the display unit 22 and displays an operation state of the measurement device 2 or the measurement result. For example, as shown in Fig. 2, the movement distance and a split time (elapsed time) are displayed on the display unit 22.

The detail information generation unit 273 generates one detail information item including information measured by the measurement unit 24 from a time point when a measurement start signal is output from the input unit 23 to a time point when a measurement completion signal is output, and time information which is the time when this information is measured. For example, in a case where the measurement unit 24 performs the measurement every second, the detail information includes the time every second and the information measured by each sensor at that time. In a case where a measurement interval is previously set in the measurement device 2 before the measurement starts, the time at the time of the measurement by each sensor is informed by recording the measurement start time in the storage unit, and accordingly it is not necessary to record the time every second in the storage unit as the detail information.

Specifically, the detail information includes time information, GPS information (latitude, longitude, and altitude), distance information such as a speed and a movement distance, pitch information such as a frequency of a leg movement or a length of stride, and a pulse rate or a heart rate.

The summary information generation unit 274 generates summary information representing a summary of the detail information generated by the detail information generation unit 273.

The summary information is configured with split information and lap information.

The split information is a value derived by using a measurement value measured from the measurement start operation to the measurement completion operation, and includes split time, a movement distance, the number of steps, calorie consumption, measurement start time, measurement completion time, a highest altitude, a lowest altitude, an altitude at a start point, an altitude at a finish point, a cumulative ascent altitude, a cumulative descent altitude, a pitch (maximum, minimum, and average), a length of stride (maximum, minimum, and average), a heart rate (maximum, minimum, and average), an average speed, an average pace, a date, or the like.

For example, the split time is the elapsed time from a time point when the measurement start signal is output from the input unit 23 to a time point when the measurement completion signal is output, the movement distance is a movement distance of the measurement device 2 during the elapsed time, and the date is a date at a time point when the measurement start signal or the measurement completion signal is output.

Herein, the split time, the movement distance, and the date included in the split information are displayed on the display unit 31 of the mobile information device 3A, and therefore function as title information for a user to identify the detail information. That is, the summary information generation unit 274 includes a title information generation unit 274A which generates the title information.

The lap information includes measured elapsed time in lap setting conditions (movement distance or elapsed time), a lap time, a lap distance (movement distance), the number of steps, calorie consumption, a cumulative ascent altitude, a cumulative descent altitude, an average speed, an average pace, a pitch, a length of stride, a pulse rate, or a heart rate. In addition, the lap information includes a number of laps for identifying the number of laps.

An index number is used in the identification of the detail information and the summary information in the measurement information management system 1A. In addition, other identifiers may be used instead of the index number.

The storage control unit 275 stores the detail information generated by the detail information generation unit 273 and the summary information generated by the summary information generation unit 274 in the storage unit 25.

The summary information transmission unit 276 transmits the summary information stored in the storage unit 25 (summary information not transmitted) to the mobile information device 3A, according to a transmission request signal of the summary information transmitted from the mobile information device 3A. That is, the summary information transmission unit 276 includes a title information transmission unit 276A which transmits the title information. In addition, the summary information transmission unit 276 transmits a data volume of each detail information item stored in the storage unit 25 (detail information not transmitted) to the mobile information device 3A, before transmitting the summary information.

The detail information transmission unit 277 transmits the detail information which is requested to be transmitted among the detail information items stored in the storage unit 25, to the mobile information device 3A, according to the transmission request signal of the detail information transmitted from the mobile information device 3A.

### Configuration of Mobile Information Device

The mobile information device 3A includes a display unit 31, an input unit 32, a storage unit 33, a transmission and reception unit 34, and a control unit 35A.

The display unit 31 includes a display panel, and displays a predetermined image by control of the control unit 35A.

The input unit 32 includes a button provided on an outer surface of a case of the mobile information device 3A, and a touch panel provided according to a display area of an image of the display unit 31. The input unit 32 outputs an operation signal corresponding to an input operation of a user with respect to the button and the touch panel to the control unit 35A.

The storage unit 33 is configured with a flash memory or the like, and stores various programs and information items necessary for the operation of the mobile information device 3A. This storage unit 33, for example, stores the detail information or the summary information received from the measurement device 2.

The transmission and reception unit 34 is a communication module for communicating with the measurement device 2 or the like. This transmission and reception unit 34 receives and transmits the information from and to the measurement device 2 or the like, by the control of the control unit 35A.

The control unit 35A controls the operation of the mobile information device 3A, and is configured with the CPU. As the CPU executes a program stored in the storage unit 33, the control unit 35A functions as a summary information request unit 351, a transfer time calculation unit 352, a display control unit 353, a detail information request unit 354, a transfer time determination unit 358, and a threshold value setting unit 359.

When the input unit 32 determines that an operation for receiving the summary information is performed and outputs an operation signal to the control unit 35A, the summary information request unit 351 controls the transmission and reception unit 34 and transmits the transmission request signal of the summary information to the measurement device 2.

The transfer time calculation unit 352 calculates an estimated transfer time necessary for transferring the detail information to the mobile information device 3A from the measurement device 2. The estimated transfer time is calculated based on the data volume (data size) of the detail information, and a communication speed measured when the summary information is transferred to the mobile information device 3A from the measurement device 2. In addition, the estimated transfer time can also be calculated based on the data volume of the detail information and the communication speed set in advance. The communication speed set in advance is, for example, 10 kbps.

The transfer time determination unit 358 determines whether or not a value of the estimated transfer time calculated by the transfer time calculation unit 352 is shorter than a predetermined threshold value set in advance.

The detail information request unit 354 transmits the transmission request signal of the detail information of which the value of the estimated transfer time is determined to be shorter than the predetermined threshold value by the transfer time determination unit 358, among the detail information items corresponding to each received summary information item, to the measurement device 2.

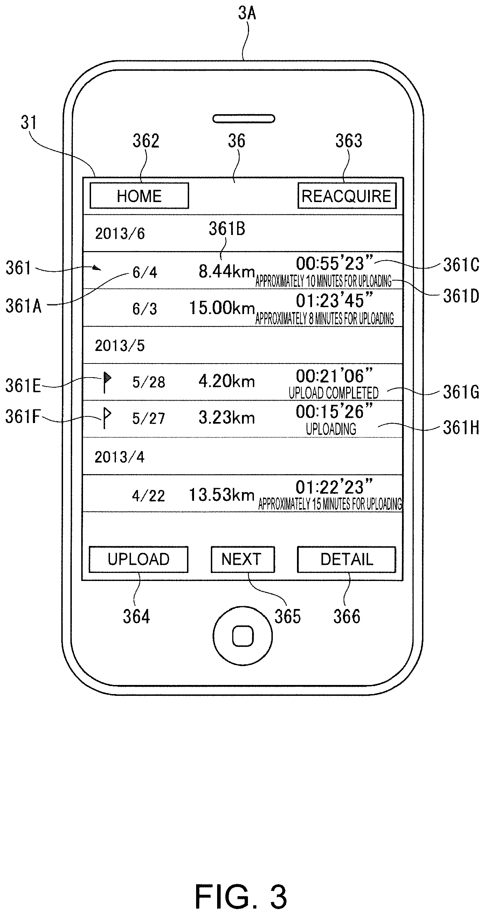

As shown in Fig. 3, the display control unit 353 generates a summary information list screen 36 showing a list of the summary information received from the measurement device 2, and displays the screen on the display unit 31. Five title information items 361 corresponding to five measurement data items (measurement values from the measurement start operation to the measurement stop operation) are displayed in a line in a longitudinal direction of the display unit 31, on the summary information list screen 36. One title information item 361 is configured with a date 361A, a movement distance 361B, and a split time 361C as default information items. In addition, an estimated transfer time 361D necessary for transferring the detail information calculated by the transfer time calculation unit 352 is displayed on the summary information list screen 36, in accordance with each measurement data item.

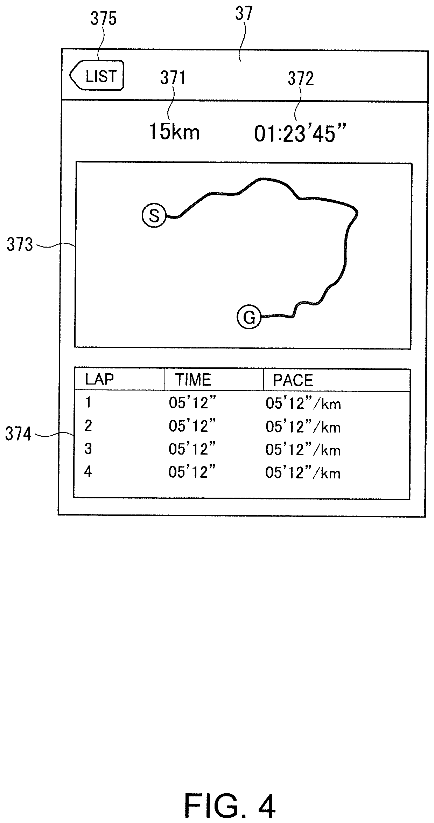

As shown in Fig. 4, the display control unit 353 can generate a detail screen 37 showing a detailed measurement result based on the summary information and the detail information received from the measurement device 2, and can display the screen on the display unit 31.

When the input unit 32 determines that a selection operation and a transmission operation of the title information to be a transfer target from the title information displayed on the summary information list screen 36 are performed, and outputs an operation signal to the control unit 35A, the detail information request unit 354 controls the transmission and reception unit 34, and transmits the transmission request signal of the detail information corresponding to the title information selected according to the operation signal, to the measurement device 2.

When the input unit 32 determines that a setting operation of setting a threshold value is performed and outputs an operation signal to the control unit 35A, the threshold value setting unit 359 sets a value of the predetermined threshold value to be compared with the estimated transfer time by the transfer time determination unit 358, according to this operation signal.

### Measurement Process

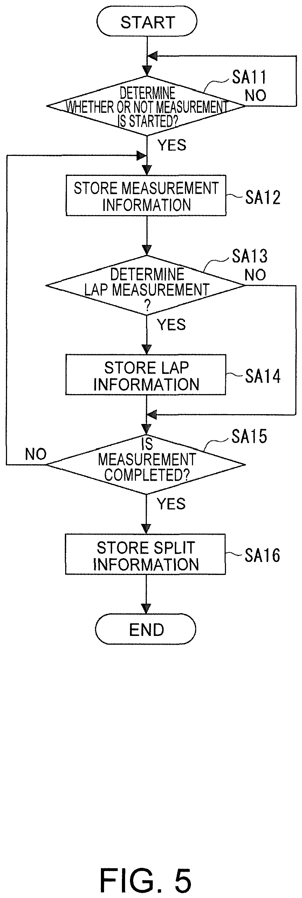

Fig. 5 is a flowchart showing a measurement process executed by the measurement device 2.

The control unit 27 determines whether or not the measurement start signal is output from the input unit 23 (SA11). When NO is determined in SA11, the control unit 27 performs the determination in SA11 again.

When YES is determined in SA11, the detail information generation unit 273 acquires the measurement start time, and the measurement unit 24 performs the measurement. The detail information generation unit 273 acquires the acquired measurement start time, the information measured by the measurement unit 24, and the time information obtained by measuring the information. The acquired information is stored in the storage unit 25 by the storage control unit 275 (SA12). When the measurement unit 24 performs the measurement at time intervals set in advance, it is possible to calculate the measurement time from the measurement start time and the time interval, and therefore the time information obtained by measuring the information may not be stored in the storage unit 25.

Next, the control unit 27 determines a lap measurement timing (SA13). In detail, when an operation signal for executing the lap measurement process is output from the input unit 23, or when the measurement device 2 is moved for a distance set in advance as the lap measurement interval, the control unit 27 can determine that the lap measurement timing has arrived. In addition, the lap measurement interval may be configured for determining that the lap measurement timing has arrived when the time set in advance has elapsed.

When YES is determined in SA13, the summary information generation unit 274 collects the information which is measured by the measurement unit 24 and stored in the storage unit 25, generates the lap information, and stores the generated lap information in a lap information storage area which is secured in advance in the storage unit 25 (SA14).

After the process in SA14 and when NO is determined in SA13, the control unit 27 determines whether or not the measurement completion signal is output from the input unit 23 (SA15). When NO is determined in SA15, the control unit 27 causes a process to return to SA12.

When YES is determined in SA15, the detail information generation unit 273 collects the information items which are measured by the measurement unit 24 and stored in the storage unit 25 to generate the split information, and stores the generated split information in a split information storage area which is secured in advance in the storage unit 25 (SA16), and the process ends.

With the processes described above, the split information, the lap information regarding the same number of laps as the number of times of the lap measurement, and the detail information having the data size corresponding to the measurement time are stored in the storage unit 25.

### Transfer Process

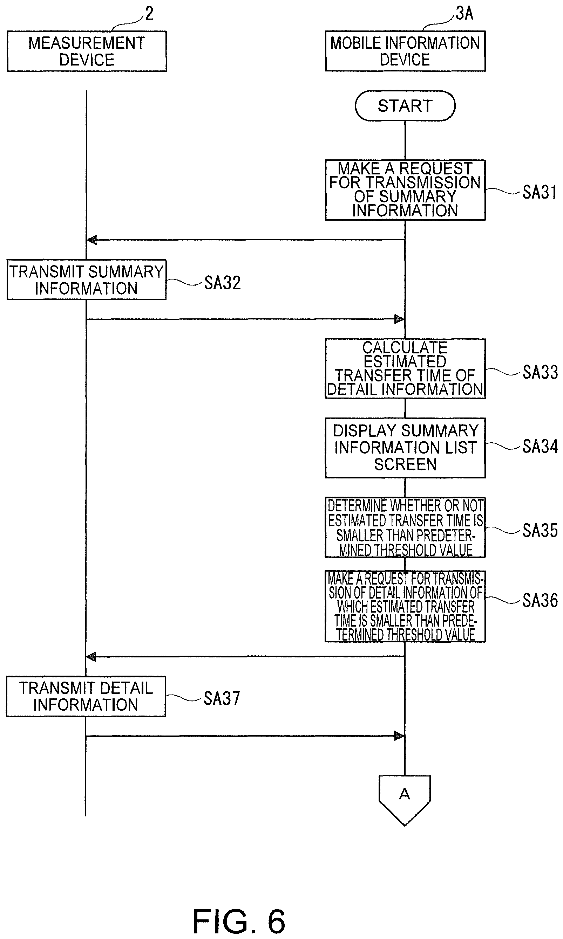

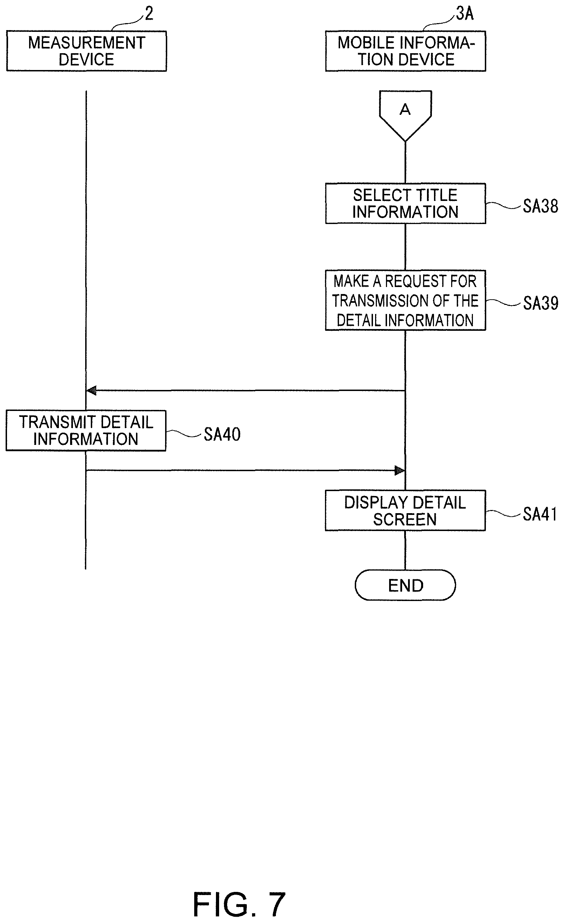

Figs. 6 and 7 are flowcharts showing a transfer process of the measurement information executed by the measurement information management system 1A. The detail information and the summary information are stored in the storage unit 25 of the measurement device 2.

In the mobile information device 3A, when the input unit 32 determines that an operation for receiving the summary information is performed and outputs an operation signal to the control unit 35A, the summary information request unit 351 transmits the transmission request signal for making a request for transmission of the summary information to the measurement device 2 (SA31). At that time, when the communication connection of BLE between the mobile information device 3A and the measurement device 2 fails, the failure of the communication connection is displayed on the display unit 31 so that a communication error is notified to a user by using an alarm sound or a voice, and accordingly it is possible to promote a user to retry the communication. When the measurement device 2 is verified in advance as a communication partner (when the measurement device and the mobile information device are paired), the mobile information device 3A may automatically transmit the transmission request signal of the summary information to the measurement device 2, as the measurement device 2 approaches.

When the measurement device 2 receives the transmission request signal of the summary information which is transmitted by the summary information request unit 351, the summary information transmission unit 276 transmits the summary information stored in the storage unit 25 (summary information not transmitted) to the mobile information device 3A (SA32). Herein, the summary information transmission unit 276 transmits the data volume (data size) of each detail information item stored in the storage unit 25 (summary information item not transmitted) to the mobile information device 3A, before transmitting the summary information. In addition, the transmission of the data volume may be performed after the transmission of the summary information.

When the mobile information device 3A receives the summary information which is transmitted by the summary information transmission unit 276, the transfer time calculation unit 352 calculates the estimated transfer time necessary for transferring the corresponding detail information from the measurement device 2 to the mobile information device 3A, with respect to each summary information item (SA33). In addition, for the calculation of the estimated transfer time, it is not necessary to wait for the completion of the reception of all summary information items, and the calculation of the estimated transfer time may be sequentially started in a stage where the reception of the corresponding summary information is completed.

The estimated transfer time is calculated based on the data volume of the detail information, and the communication speed measured when the summary information is transferred to the mobile information device 3A from the measurement device 2.

Next, as shown in Fig. 3, the display control unit 353 generates the summary information list screen 36 showing a list of the summary information received from the measurement device 2 in SA32, and displays the screen on the display unit 31 (SA34).

As described above, the date 361A, the movement distance 361B, and the split time 361C which are the title information 361 displayed on the summary information list screen 36, function to allow a user to identify the detail information.

As described above, a user can identify the detail information generated by the measurement device 2, by monitoring the summary information list screen 36, and can select the detail information desired to be transferred by touching the title information 361 displayed on the summary information list screen 36. In addition, since the estimated transfer time 361D is displayed on the summary information list screen 36, a user can check the time taken for transferring the detail information.

Further, information (for example, calorie consumption) other than the date 361A, the movement distance 361B, and the split time 361C, or the lap information is displayed on the summary information list screen 36.

The process in SA34 can be executed in parallel with the processes in SA32 and SA33. That is, after executing the process in SA31, the display control unit 353 may display the summary information list screen not including the title information on the display unit 31, and may sequentially display each title information item on the summary information list screen, in a stage where the calculation of the corresponding estimated transfer time is completed.

In addition to the title information 361, a "home" button 362, a "reacquire" button 363, an "upload" button 364, a "next" button 365, and a "detail" button 366 are displayed on the summary information list screen 36. The "upload" button 364 may be displayed as a "transmit detail information" button or a "transmit all measurement data items" button.

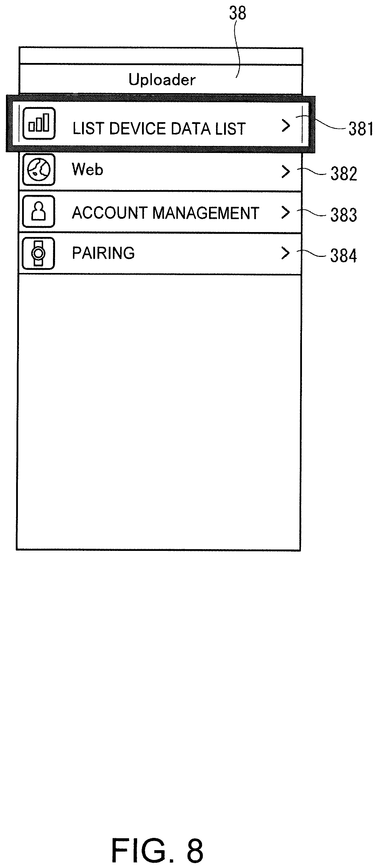

When a user touches (taps) the "home" button 362, the screen is switched to a home screen 38 shown in Fig. 8. A button 381 for displaying the summary information list screen, a button 382 for displaying a web site, a button 383 for displaying an account management screen, and a button 384 for displaying a pairing setting screen are displayed on the home screen 38.

When a user touches the "reacquire" button 363, reacquisition of the summary information and the redisplay of the summary information list screen 36 are performed. When the summary information list screen 36 is provided with a plurality of screens, the page of the screen is switched to the next page when a user touches the "next" button 365.

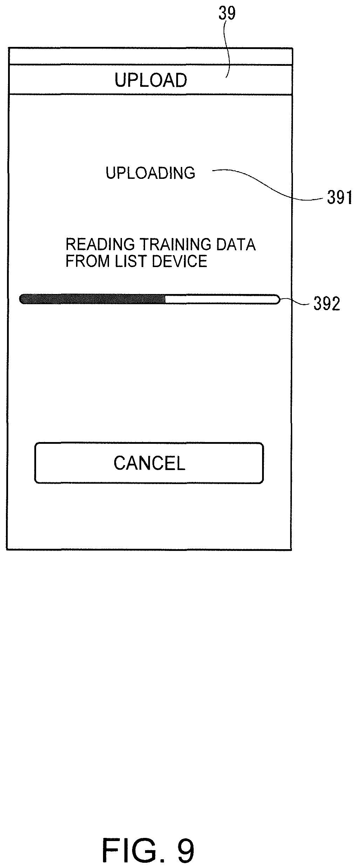

When a user touches the "upload" button 364, the screen is switched to an upload screen 39 shown in Fig. 9, and the transmission of the selected detail information from the measurement device 2 to the mobile information device 3A is started. A message 391 showing that the detail information is being transferred, and a gauge 392 representing remaining time until the transfer is completed, are displayed on the upload screen 39.

When a user touches the "detail" button 366, the detail screen 37 is displayed.

Next, the transfer time determination unit 358 determines whether or not each value of the estimated transfer time calculated by the transfer time calculation unit 352 is shorter than the predetermined threshold value set in advance (SA35). The predetermined threshold value is, for example, 5 minutes.

The detail information request unit 354 transmits the reception request signal of the detail information of which the value of the estimated transfer time is determined to be shorter than the predetermined threshold value by the transfer time determination unit 358, among the detail information items corresponding to each received summary information item, to the measurement device 2 (SA36). That is, herein, the detail information request unit 354 does not transmit the transmission request signal of the detail information of which the value of the estimated transfer time is determined to be equal to or greater than the predetermined threshold value by the transfer time determination unit 358.

In addition, it is possible to cause the transmission request signal of the detail information not to be transmitted in SA36, by setting the predetermined threshold value as 0 seconds by the threshold value setting unit 359.

When the measurement device 2 receives the transmission request signal of the detail information transmitted from the mobile information device 3A, the detail information transmission unit 277 transmits the detail information item which is requested to be transmitted among the detail information items stored in the storage unit 25, to the mobile information device 3A (SA37).

Herein, an icon 361E indicating the completion of the transfer is displayed with respect to the title information 361 of which the transfer of the corresponding detail information is completed, in the summary information list screen 36. In addition, a message 361G noted as "upload completed" is displayed instead of the estimated transfer time 361D. Herein, completion of the transfer indicates a state where the reception of the detail information of the mobile information device 3A is successful. That is, in a case where the detail information is in a reception process or in a case where the reception of the detail information fails, the icon 361E and the message 361G are not displayed. In addition, since a user can recognize that the reception of the detail information is completed from the display of any one of the icon 361E and the message 361G, any one of the icon 361E and the message 361G may be configured to be displayed.

In addition, an icon 361F indicating the transferring is in progress is displayed with blinking with respect to the title information 361 of which the corresponding detail information is being transferred. Further, a message 361H noted as "uploading" is displayed instead of the estimated transfer time 361D. Accordingly, a user can identify the detail information which is not requested to be transmitted among the detail information items generated by the measurement device 2, by browsing the summary information list screen 36.

When a user touches the "upload" button 364 in a state where the title information which is a transfer target among the title information items 361 is touched and selected, the input unit 23 determines this operation and outputs the operation signal to the control unit 35A (SA38).

The detail information request unit 354 transmits the transmission request signal of the detail information corresponding to the selected title information 361, to the measurement device 2 (SA39). In a case where the title information 361 displayed with the icons 361E and 361F is selected, the detail information request unit 354 does not transmit the transmission request signal. Therefore, it is possible to avoid overlapping transmission of the transmission request signal.

When the measurement device 2 receives the transmission request signal of the detail information transmitted from the mobile information device 3A, the detail information transmission unit 277 transmits the detail information item which is requested to be transmitted among the detail information items stored in the storage unit 25, to the mobile information device 3A (SA40).

When the mobile information device 3A receives the detail information transmitted from the measurement device 2, the display control unit 353, as shown in Fig. 4, generates the detail screen 37 showing the detailed measurement result and displays the screen on the display unit 31, based on the detail information transmitted from the measurement device 2 and the summary information which is already received (SA41). In addition, the detail screen 37 may be configured so as to be displayed with an input operation by a user, without automatically transitioning.

A movement distance 371, a split time 372, map information 373, lap display information 374, and a "list" button 375 are displayed on the detail screen 37.

A map, a start point, a finish point, and a movement locus from the start point to the finish point shown on the map are displayed on the map information 373. In addition, the map information 373 may not be displayed.

A lap time and an average pace for each lap are displayed on the lap display information 374.

When a user touches the "list" button 375, the display screen is switched to the summary information list screen.

The title information is not deleted and continues to be displayed on the summary information list screen 36 shown in Fig. 3, even after the mobile information device 3A receives the detail information from the measurement device 2. In this case, the icon 361E and the message 361G indicating the completion of the reception of the detail information are displayed as described above, with respect to the corresponding title information. Therefore, a user can easily determine whether or not the reception of the detail information is completed. When a user touches the "detail" button 366 in a state where this title information is selected, the display control unit 353 displays the detail screen 37 shown in Fig. 4 on the display unit 31.

### Effects of First Embodiment

According to the embodiment described above, the following effects are obtained.

In SA36, the detail information request unit 354 transmits the transmission request signal of the detail information of which the value of the estimated transfer time is determined to be shorter than the predetermined threshold value by the transfer time determination unit 358, to the measurement device 2.

According to this, the detail information of which the estimated transfer time is determined to be shorter than the predetermined threshold value is automatically transmitted from the measurement device 2 to the mobile information device 3A, even without the operation of the mobile information device 3A or the execution of the transfer process of the detail information by a user. Therefore, it is possible to simplify the operation performed by a user and to improve convenience.

In addition, since the detail information of which the estimated transfer time is determined to be equal to or greater than the predetermined threshold value is not automatically transmitted, it is possible to regulate an upper limit of the transfer time. Also with this point of view, it is possible to improve convenience.

Regarding the detail information of which the estimated transfer time is determined to be greater than the predetermined threshold value and the transfer process is not automatically started in the processes in SA36 and SA37, the transfer process can be executed by selecting the title information displayed on the summary information list screen 36 in SA38 and touching the "upload" button 364.

Since the date, the split time, and the movement distance are displayed on the summary information list screen 36 as the title information corresponding to each measurement data item, a user can browse the information items and therefore can easily identify the detail information, compared to a case where only the number indicating the measurement order is displayed as the title information, for example. The display order of the date, the split time, and the movement distance may be configured to be changed according to a user's taste. By doing so, a user also can easily recognize whether or not the data is the measurement data including the detail information which is desired to be checked. In addition, the display order of the title information 361 for each data item corresponding to each measurement data item (measurement value from the measurement start operation to the measurement stop operation) displayed as a list in a line in a longitudinal direction of the summary information list screen 36, may not be the order by date. For example, the information items may be displayed in the order by best measurement data. A user can easily recognize whether or not the data is the measurement data including the detail information which is desired to be checked in the same manner as described above. As described above, it is possible to easily perform the selection operation of the title information.

Since the summary information includes the calorie consumption or the lap information, in addition to the title information, it is possible to display the information items thereof on the display unit 31, before the mobile information device 3A receives the detail information. By doing so, a user can check the calorie consumption or the lap information before the detail information is transferred.

Since the threshold value setting unit 359 is provided, a user can freely set a value of the predetermined threshold value by operating the input unit 32. Accordingly, a user can freely set the detail information for automatically starting the transfer process thereof, based on the estimated transfer time. Therefore, the transfer can be set to be automatically performed as much as possible or can be set to be manually performed as much as possible, and thus it is possible to respond to detailed requests of a user.

### Second Embodiment

Next, a second embodiment of the invention will be described with reference to the drawings.

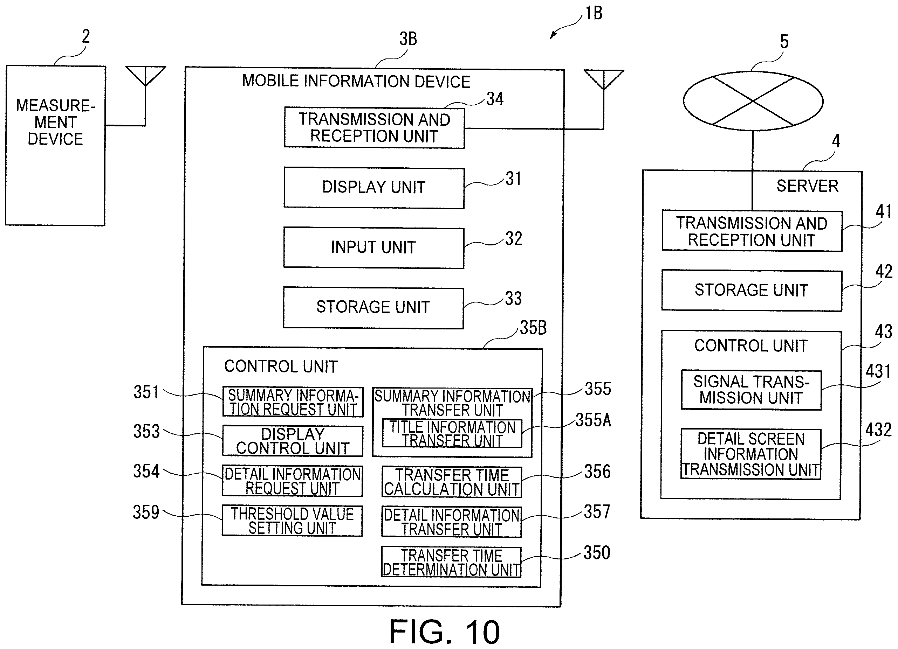

Fig. 10 is a block diagram showing a configuration of a measurement information management system 1B according to the second embodiment.

As shown in Fig. 10, a measurement information management system 1B of the second embodiment includes a mobile information device 3B, a network 5, and a server 4 connected to the network 5, in addition to the measurement device 2 having the same configuration as that of the first embodiment.

The wireless communication is performed between the measurement device 2 and the mobile information device 3B, and between the mobile information device 3B and the network 5. In addition, wired communication may be performed between the mobile information device 3B and the network 5.

The mobile information device 3B receives the measurement information (summary information and detail information) measured by the measurement device 2 and then transfers the received measurement information to the server 4.

### Configuration of Mobile Information Device

The mobile information device 3B has a configuration of a control unit which is different from that of the mobile information device 3A of the first embodiment. That is, a control unit 35B of the mobile information device 3B includes a summary information transfer unit 355, a transfer time calculation unit 356, a detail information transfer unit 357, and a transfer time determination unit 350, in addition to the summary information request unit 351, the display control unit 353, the detail information request unit 354, and the threshold value setting unit 359 having the same configuration as those in the first embodiment.

The summary information transfer unit 355 controls the transmission and reception unit 34 such that it transfers the summary information received from the measurement device 2, to the server 4 through the network 5. That is, the summary information transfer unit 355 includes a title information transfer unit 355A which transfers the title information.

The transfer time calculation unit 356 calculates the estimated transfer time necessary for transferring the detail information from the measurement device 2 to the server 4 through the mobile information device 3B. The estimated transfer time is the total time of the estimated transfer time between the measurement device 2 and the mobile information device 3B and the estimated transfer time between the mobile information device 3B and the server 4, and is calculated based on the measurement values of the communication speed. In addition, the estimated transfer time can be calculated based on the communication speed set in advance.

The transfer time determination unit 350 determines whether or not the estimated transfer time calculated by the transfer time calculation unit 356 is shorter than the predetermined threshold value set in advance. The predetermined threshold value is set by the threshold value setting unit 359.

In the second embodiment, the detail information request unit 354 transmits the transmission request signal of the detail information of which the value of the estimated transfer time is determined to be shorter than the predetermined threshold value by the transfer time determination unit 350, among the detail information items corresponding to each received summary information item, to the measurement device 2.

The detail information transfer unit 357 controls the transmission and reception unit 34 such that it transfers the detail information received from the measurement device 2 to the server 4 through the network 5.

### Configuration of Server

The server 4 includes a transmission and reception unit 41, a storage unit 42, and a control unit 43.

The storage unit 42 is configured with a hard disk drive (HDD) or a flash memory, and stores various programs and information items necessary for operating the server 4. The storage unit 42 stores the detail information or the summary information received from the measurement device 2 through the mobile information device 3B, for example.

The transmission and reception unit 41 is a communication module for communication with a terminal device of the mobile information device 3B through the network 5. The transmission and reception unit 41 transmits and receives various signals or information items to and from the terminal device, by the control of the control unit 43.

The control unit 43 controls the operation of the server 4, and is configured with a CPU. As the CPU executes a program stored in the storage unit 42, the control unit 43 functions as a signal transmission unit 431 and a detail screen information transmission unit 432.

When the summary information transferred from the mobile information device 3B is received, the signal transmission unit 431 transmits a reception notification signal notifying the reception of the summary information to the mobile information device 3B.

The detail screen information transmission unit 432 generates detail screen information showing a detail measurement result in a state to be easily understandable for a user, based on the summary information and the detail information transferred from the mobile information device 3B, and transmits the generated detail screen information to the mobile information device 3B.

### Transfer Process

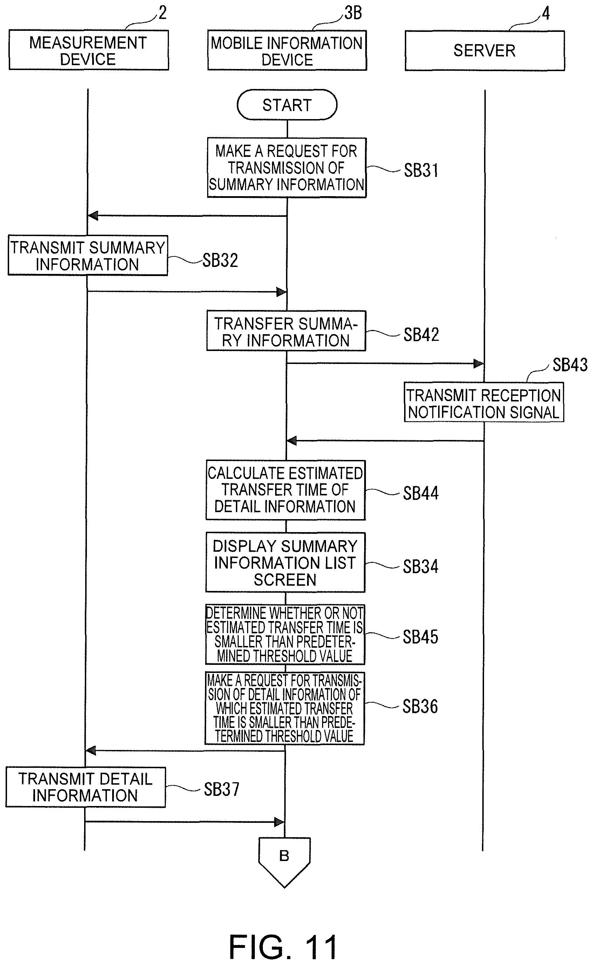

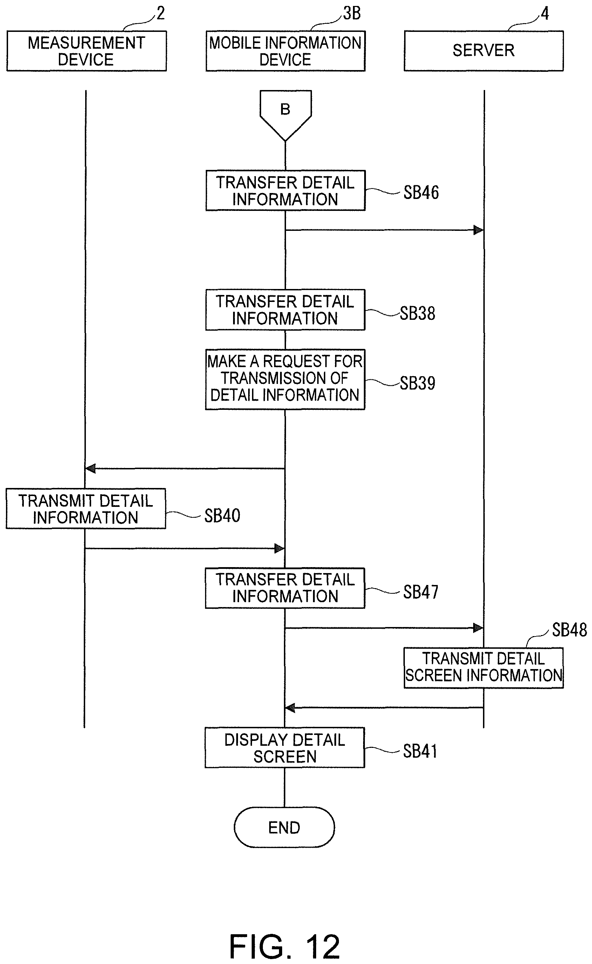

Figs. 11 and 12 are flowcharts showing a transfer process of the measurement information executed by the measurement information management system 1B. The summary information and the detail information are stored in the storage unit 25 of the measurement device 2.

As shown in Figs. 11 and 12, the measurement information management system 1B performs the processes in SB31, SB32, SB34, and SB36 to SB48. Herein, the processes in SB31, SB32, SB34, and SB36 to SB41 are the same processes as in SA31, SA32, SA34, and SA36 to SA41 of the first embodiment, and therefore the description thereof will be omitted.

In the second embodiment, when the mobile information device 3B receives the summary information transmitted from the measurement device 2 in SB32, the summary information transfer unit 355 transfers the received summary information to the server 4 (SB42).

When the server 4 receives the summary information transferred from the mobile information device 3B, the signal transmission unit 431 transmits the reception notification signal to the mobile information device 3B (SB43).

When the mobile information device 3B receives the reception notification signal transmitted from the server 4, the transfer time calculation unit 356 calculates the estimated transfer time necessary for transferring the corresponding detail information from the measurement device 2 to the server 4 through the mobile information device 3B, with respect to each summary information item received from the measurement device 2 (SB44). In addition, for the calculation of the estimated transfer time, it is not necessary to wait for the completion of the transfer of all summary information items, and the calculation of the estimated transfer time may be sequentially started in a stage where the transfer of the corresponding summary information is completed.

The estimated transfer time is the total time of the estimated transfer time between the measurement device 2 and the mobile information device 3B and the estimated transfer time between the mobile information device 3B and the server 4, and is calculated based on the measurement values of the communication speed.

In SB34, the display control unit 353 displays the summary information list screen 36 on the display unit 31. Herein, the estimated transfer time calculated in SB44 is displayed on the summary information list screen 36.

The process in SA34 can be executed in parallel with the processes in SB32 and SB42 to SB44. That is, after executing the process in SB31, the display control unit 353 may display the summary information list screen not including the title information on the display unit 31, and may sequentially display each title information item on the summary information list screen, in a stage where the calculation of the corresponding estimated transfer time is completed.

The transfer time determination unit 350 determines whether or not each value of the estimated transfer time calculated by the transfer time calculation unit 356 is shorter than the predetermined threshold value set in advance (SB45). The predetermined threshold value is the same value as the predetermined threshold value in the first embodiment, and is, for example, 5 minutes.

In SB36, the detail information request unit 354 transmits the transmission request signal of the detail information of which the value of the estimated transfer time is determined to be shorter than the predetermined threshold value by the transfer time determination unit 350, among the detail information items corresponding to each received summary information item, to the measurement device 2. That is, the detail information request unit 354 does not transmit the transmission request signal of the detail information of which the value of the estimated transfer time is determined to be equal to or greater than the predetermined threshold value by the transfer time determination unit 350.

In addition, in the second embodiment, when the mobile information device 3B receives the detail information transmitted from the measurement device 2 in SB37, the detail information transfer unit 357 transfers the received detail information to the server 4 (SB46).

In addition, in the second embodiment, when the mobile information device 3B receives the detail information transmitted from the measurement device 2 in SB40, the detail information transfer unit 357 transfers the received detail information to the server 4 (SB47).

When the server 4 receives the detail information transferred from the mobile information device 3B, the detail screen information transmission unit 432 generates the detail screen information showing a detailed measurement result based on the detail information transmitted from the mobile information device 3B and the summary information which is already received by the server, and transmits the generated detail screen information to the mobile information device 3B (SB48).

When the mobile information device 3B receives the detail screen information transmitted from the server 4, the display control unit 353 can generate the detail screen 37 based on the received detail screen information, and can display the generated detail screen 37 on the display unit 31 in SB41.

The title information is not deleted and continues to be displayed on the summary information list screen 36, even after the transfer of the detail information from the measurement device 2 to the server 4 is completed and the reception of the detail information by the server 4 is successful. In this case, the icons 361E and the message 361G indicating the server 4 has acquired the detail information are displayed with respect to the corresponding title information. Since a user can recognize that the reception of the detail information is completed from the display of any one of the icon 361E and the message 361G, any one of the icon 361E and the message 361G may be configured to be displayed. When a user touches the "detail" button 366 in a state where this title information is selected, the control unit 35B accesses the server 4 and receives the corresponding detail screen information from the server 4. The display control unit 353 generates the detail screen 37 based on the received detail screen information and displays the generated detail screen 37 on the display unit 31.

In addition, the title information may be deleted from the summary information list screen 36, after the server 4 acquires the detail information.

By accessing the server 4 with the mobile information device 3B or other devices, it is possible to browse the detail information transferred to the server 4.

### Effects of Second Embodiment

According to the second embodiment described above, the same effects as in the first embodiment are obtained with the same configuration or process as in the first embodiment, and the following effects are obtained.

Since the detail information is transferred to the server 4, it is possible to manage the detail information in the server 4. By doing so, it is possible to generate and analyze various information items based on the detail information in the server 4. That is, it is possible to use the data stored in the server 4. In addition, since it is possible to store the measurement information items in the server 4, it is possible to avoid capacity of the storage unit 33 of the mobile information device 3B being occupied by the measurement information. Further, it is possible to browse the information items with other devices or to share the information items with other users, by accessing the server 4.

### Other Embodiments

The invention is not limited to the configurations of the embodiments described above, and various modifications can be performed within a scope of the invention.

For example, in the embodiments described above, the detail information includes the GPS information, the distance information, the pitch information, the heart rate, and the like, but may include at least the position information such as the GPS information.

In the embodiments described above, the title information includes the date, the movement distance, and the split time, but the invention is not limited thereto. For example, the title information may only include any one or two of the date, the movement distance, and the split time. In addition, the title information may be the number indicating the measurement order, for example, or position information of a specific point in a path from the start point to the finish point, which is information separate from the summary information. That is, the title information may be at least one information item which is measured by each sensor from the measurement start operation to the measurement completion operation of the measurement device 2, and which can designate the measurement data for one time of measurement recorded in the storage unit 25 (for example, data for one time of measurement recorded when running near the house).

In the first embodiment, the estimated transfer time is calculated based on the measurement value of the communication speed when the summary information is transferred, but for example, in a case of sequentially transferring the detail information, the estimated transfer time may be calculated based on the measurement value of the communication speed in the previous transfer of the detail information.

In the first embodiment, the mobile information device 3A calculates the estimated transfer time necessary for transmitting the detail information from the measurement device 2 to the mobile information device 3A, but the measurement device 2 may calculate the estimated transfer time. In this case, the calculated estimated transfer time is included in the summary information, for example, and is transmitted to the mobile information device 3A.

## Claims

1. A measurement device (2) which communicates with an information device (3A, 3B), the measurement device (2) comprising:
a0) a storage unit (25),
a1) a clock unit (271) which measures the time,
a2) a measurement unit (24; 241) which measures position information,
a3) a detail information generation unit (273) which generates detail information including the position information,
a4) a title information generation unit (274, 274A) which generates title information for identifying the detail information, and
a5) a detail information transmission unit (273) which transmits the detail information to the information device (3A) according to a transmission request signal, when the transmission request signal of the detail information of which the estimated transfer time necessary for transmitting the detail information to the information device (2) is determined to be shorter than a predetermined threshold value set in advance is received.

2. An information device (3A) which communicates with a measurement device (2), the information device (3A) comprising:
b1) a transfer time calculation unit (352) which calculates an estimated transfer time necessary for transmitting the detail information corresponding to title information transmitted from the measurement device (2), from the measurement device (2) to the information device (3A),
b2) a transfer time determination unit (358) which determines whether or not the estimated transfer time is shorter than a predetermined threshold value set in advance,
b3) a detail information request unit (354) which outputs a transmission request signal of the detail information of which the estimated transfer time is determined to be shorter than the predetermined threshold value by the transfer time determination unit (358), and
b4) a transmission unit (34) which transmits the transmission request signal of the detail information to the measurement device (2).

3. A measurement information management system, comprising:
i) a measurement device (2) according to claim 1; and
ii) an information device (3A) which communicates (1A) with the measurement device (2), the information device (3A) being configured according to claim 2.

4. The measurement information management system according to claim 2 or 3, wherein the transfer time calculation unit (352) calculates the estimated transfer time based on a data volume of the detail information and a communication speed set in advance.

5. The measurement information management system according to claim 2 or 3, wherein the transfer time calculation unit (352) calculates the estimated transfer time based on a data volume of the detail information and a communication speed measured when the title information is transmitted from the measurement device (2) to the information device (3A).

6. A measurement information management system according to claim 3, further comprising:
a server (4) which communicates with the information device (3B), wherein
said transfer time calculation unit (356) is further adapted to calculate an estimated transfer time necessary for transmitting the detail information corresponding to the title information transmitted from the measurement device (2), from the measurement device (2) to the server (4) through the information device (3B), and further comprising;
a reception unit (34) which receives the detail information transmitted from the measurement device (2) according to the transmission request signal of the detail information, and
a detail information transfer unit (357) which transfers the received detail information to the server (4).

7. The measurement information management system according to claim 6, wherein the transfer time calculation unit (356) calculates the estimated transfer time based on a communication speed set in advance.

8. The measurement information management system according to claim 6, wherein the transfer time calculation unit (356) calculates the estimated transfer time based on a measurement value of a communication speed.

9. The measurement information management system according to any one of claims 3 to 8, wherein the information device (3A, 3B) includes a display unit (31),
a display control unit (353) which displays the title information transmitted from the measurement device (2) on the display unit (31), and
an input unit (32) which determines that a selection operation and a transfer operation of the title information to be a transfer target from the title information items displayed on the display unit (31) are performed and outputs an operation signal, and
the detail information request unit (354) transmits the transmission request signal of the detail information corresponding to the title information selected according to the operation signal output by the input unit (32), to the measurement device (2).

10. The measurement information management system according to any one of claims 3 to 9,
wherein the measurement device (2) includes a measurement device side input unit (23) which determines that the start operation and the completion operation of the measurement are performed and outputs a measurement start signal and a measurement completion signal to the measurement unit (24),
the detail information generation unit (273) generates one detail information item including at least the position information measured by the measurement unit (24) from a time point when the measurement start signal is output to a time point when the measurement completion signal is output, and time information which is the time when the position information is measured, and
the title information generation unit (274A) generates title information including elapsed time from a time point when the measurement start signal is output to a time point when the measurement completion signal is output, a movement distance of the measurement device (2), and date information of the time point when the measurement start signal or the measurement completion signal is output.

11. The measurement information management system according to any one of claims 3 to 10,
wherein the measurement device (2) further includes
a summary information generation unit (274) which generates summary information representing a summary of the detail information, and
a summary information transmission unit (276) which transmits the summary information to the information device (3A, 3B),
the summary information includes the title information,
the summary information generation unit (274) includes the title information generation unit, and
the summary information transmission unit (276) includes a title information transmission unit which transmits the title information to the information device (3A, 3B).

12. The measurement information management system according to any one of claims 3 to 11,
wherein the information device (3A, 3B) includes
an input unit (32) which determines that a setting operation of setting a threshold value is performed and outputs an operation signal, and
a threshold value setting unit (359) which sets a value of the predetermined threshold value according to the operation signal output by the input unit (32).

13. A measurement information management method of a measurement information management system including a measurement device (2) including a storage unit (25), a clock unit (271) which measures the time, and a measurement unit (24, 241) which measures position information, and an information device (3A, 3B) which communicates with the measurement device (2), the method comprising the following steps:
a) generating detail information including the position information;
b) storing the detail information in the storage unit (25);
c) generating title information for identifying the detail information;
d) transmitting the title information to the information device (3A);
e) calculating an estimated transfer time necessary for transmitting the detail information corresponding to the title information transmitted from the measurement device (2) from the measurement device (2) to the information device (3A);
f) determining whether or not the estimated transfer time is shorter than a predetermined threshold value set in advance;
g) transmitting a transmission request signal of the detail information of which the estimated transfer time is determined to be shorter than the predetermined threshold value in the determining of the estimated transfer time, to the measurement device (2); and
h) transmitting the detail information to the information device (3A) according to a transmission request signal transmitted from the information device (3A).

14. A measurement information management program causing an information device (3A) which communicates with a measurement device (2) including a clock unit (271) which measures the time and a measurement unit (24, 241) which measures at least position information, to execute the following steps:
a) calculating an estimated transfer time necessary for transmitting detail information corresponding to title information from the measurement device (2) to the information device (3A), when the title information for identifying the detail information including at least the position information is received from the measurement device (2);
b) determining whether or not the estimated transfer time is shorter than a predetermined threshold value set in advance;
c) transmitting a transmission request signal of the detail information of which the estimated transfer time is determined to be shorter than the predetermined threshold value in the determining of the estimated transfer time, to the measurement device (2); and
d) receiving the detail information requested in the transmitting of the transmission request signal, from the measurement device (2).

## Patentansprüche

1. Messvorrichtung (2), die mit einer Informationsvorrichtung (3A, 3B) kommuniziert, wobei die Messvorrichtung (2) umfasst:
a0) eine Speichereinheit (25),
a1) eine Takteinheit (271), die die Zeit misst,
a2) eine Messeinheit (24; 241), die Positionsinformation misst,
a3) eine Detailinformationserzeugungseinheit (273), die Detailinformation erzeugt, die die Positionsinformation enthält,
a4) eine Titelinformationserzeugungseinheit (274, 274A), die Titelinformation zum Identifizieren der Detailinformation erzeugt, und
a5) eine Detailinformationsübertragungseinheit (273), die die Detailinformation gemäß einem Übertragungsanfragesignal zu der Informationsvorrichtung (3A) überträgt, wenn das Übertragungsanfragesignal der Detailinformation empfangen wird, von der die geschätzte Übertragungszeit, die zum Übertragen der Detailinformation zu der Informationsvorrichtung (2) notwendig ist, bestimmt ist, kürzer zu sein als ein vorbestimmter Schwellenwert, der im Voraus gesetzt ist.

2. Informationsvorrichtung (3A), die mit einer Messvorrichtung (2) kommuniziert, wobei die Informationsvorrichtung (3A) umfasst:
b1) eine Übertragungszeitberechnungseinheit (352), die eine geschätzte Übertragungszeit berechnet, die zum Übertragen der Detailinformation, die der von der Messvorrichtung (2) übertragenen Titelinformation entspricht, von der Messvorrichtung (2) zu der Informationsvorrichtung (3A) notwendig ist,
b2) eine Übertragungszeitbestimmungseinheit (358), die bestimmt, ob oder ob nicht die geschätzte Übertragungszeit kürzer ist als ein vorbestimmter Schwellenwert, der im Voraus gesetzt ist,
b3) eine Detailinformationsanfrageeinheit (354), die ein Übertragungsanfragesignal der Detailinformation ausgibt, von der die geschätzte Übertragungszeit bestimmt ist, kürzer zu sein als der von der Übertragungszeitbestimmungseinheit (358) vorbestimmte Schwellenwert, und
b4) eine Übertragungseinheit (34), die das Übertragungsanfragesignal der Detailinformation zu der Messvorrichtung (2) überträgt.

3. Messinformationsverwaltungssystem, umfassend:
i) eine Messvorrichtung (2) nach Anspruch 1; und
ii) eine Informationsvorrichtung (3A), die mit der Messvorrichtung (2) kommuniziert (1A), wobei die Informationsvorrichtung (3A) nach Anspruch 2 konfiguriert ist.

4. Messinformationsverwaltungssystem nach Anspruch 2 oder 3, wobei die Übertragungszeitberechnungseinheit (352) die geschätzte Übertragungszeit basierend auf einem Datenvolumen der Detailinformation und einer im Voraus gesetzten Kommunikationsgeschwindigkeit berechnet.

5. Messinformationsverwaltungssystem nach Anspruch 2 oder 3, wobei die Übertragungszeitberechnungseinheit (352) die geschätzte Übertragungszeit basierend auf einem Datenvolumen der Detailinformation und einer Kommunikationsgeschwindigkeit, die gemessen wird, wenn die Titelinformation von der Messvorrichtung (2) zu der Informationsvorrichtung (3A) übertragen wird, berechnet.

6. Messinformationsverwaltungssystem nach Anspruch 3, weiter umfassend:
einen Server (4), der mit der Informationsvorrichtung (3B) kommuniziert, wobei die Übertragungszeitberechnungseinheit (356) weiter angepasst ist, um eine geschätzte Übertragungszeit zu berechnen, die zum Übertragen der Detailinformation, die der von der Messvorrichtung (2) übertragenen Titelinformation entspricht, von der Messvorrichtung (2) zu dem Server (4) über die Informationsvorrichtung (3B) notwendig ist, und weiter umfassend;
eine Empfangseinheit (34), die die von der Messvorrichtung (2) gemäß dem Übertragungsanfragesignal der Detailinformation übertragene Detailinformation empfängt, und
eine Detailinformationsübertragungseinheit (357), die die empfangene Detailinformation zu dem Server (4) überträgt.

7. Messinformationsverwaltungssystem nach Anspruch 6, wobei die Übertragungszeitberechnungseinheit (356) die geschätzte Übertragungszeit basierend auf einer im Voraus gesetzten Kommunikationsgeschwindigkeit berechnet.

8. Messinformationsverwaltungssystem nach Anspruch 6, wobei die Übertragungszeitberechnungseinheit (356) die geschätzte Übertragungszeit basierend auf einem Messwert einer Kommunikationsgeschwindigkeit berechnet.

9. Messinformationsverwaltungssystem nach einem der Ansprüche 3 bis 8, wobei
die Informationsvorrichtung (3A, 3B) aufweist: eine Anzeigeeinheit (31),
eine Anzeigesteuereinheit (353), die die von der Messvorrichtung (2) übertragene Titelinformation auf der Anzeigeeinheit (31) anzeigt, und
eine Eingabeeinheit (32), die bestimmt, dass eine Auswahloperation und eine Übertragungsoperation der Titelinformation, die von den auf der Anzeigeeinheit (31) angezeigten Titelinformationselementen ein Übertragungsziel sein soll, durchgeführt werden und die ein Betriebssignal ausgibt, und
die Detailinformationsanfrageeinheit (354) das Übertragungsanfragesignal der Detailinformation, die der gemäß dem von der Eingabeeinheit (32) ausgegebenen Betriebssignal ausgewählten Titelinformation entspricht, zu der Messvorrichtung (2) überträgt.

10. Messinformationsverwaltungssystem nach einem der Ansprüche 3 bis 9, wobei
die Messvorrichtung (2) eine Messvorrichtungsseiteneingabeeinheit (23) aufweist, die bestimmt, dass die Startoperation und die Abschlussoperation der Messung durchgeführt werden und die ein Messstartsignal und ein Messabschlusssignal zu der Messeinheit (24) ausgibt,
die Detailinformationserzeugungseinheit (273) ein Detailinformationselement erzeugt, das zumindest die von der Messeinheit (24) gemessene Positionsinformation, von einem Zeitpunkt, an dem das Messstartsignal ausgegeben wird, bis zu einem Zeitpunkt, an dem das Messabschlusssignals ausgegeben wird, und Zeitinformation, die die Zeit, zu der die Positionsinformation gemessen ist, darstellt, aufweist, und
die Titelinformationserzeugungseinheit (274A) Titelinformation erzeugt, die verstrichene Zeit von einem Zeitpunkt, an dem das Messstartsignal ausgegeben wird, bis einem Zeitpunkt, an dem das Messabschlusssignals ausgegeben wird, eine Bewegungsstrecke der Messvorrichtung (2) und Datumsinformation des Zeitpunkts, an dem das Messstartsignal oder das Messabschlusssignals ausgegeben wird, aufweist.

11. Messinformationsverwaltungssystem nach einem der Ansprüche 3 bis 10, wobei die Messvorrichtung (2) weiter aufweist:
eine Zusammenfassungsinformationserzeugungseinheit (274), die Zusammenfassungsinformation erzeugt, die eine Zusammenfassung der Detailinformation darstellt, und
eine Zusammenfassungsinformationsübertagungseinheit (276), die die Zusammenfassungsinformation zu der Informationsvorrichtung (3A, 3B) überträgt,
die Zusammenfassungsinformation die Titelinformation aufweist,
die Zusammenfassungsinformationserzeugungseinheit (274) die Titelinformationserzeugungseinheit aufweist, und
die Zusammenfassungsinformationsübertagungseinheit (276) eine Titelinformationsübertragungseinheit aufweist, die die Titelinformation zu der Informationsvorrichtung (3A, 3B) überträgt.

12. Messinformationsverwaltungssystem nach einem der Ansprüche 3 bis 11, wobei die Informationsvorrichtung (3A, 3B) aufweist:
eine Eingabeeinheit (32), die bestimmt, dass eine Setzoperation des Setzens eines Schwellenwertes durchgeführt wird und die ein Betriebssignal ausgibt, und
eine Schwellenwertsetzeinheit (359), die einen Wert des vorbestimmten Schwellenwertes gemäß dem von der Eingabeeinheit (32) ausgegebenen Betriebssignal setzt.

13. Messinformationsverwaltungsverfahren eines Messinformationsverwaltungssystems, das eine Messvorrichtung (2), die eine Speichereinheit (25), eine Takteinheit (271), die die Zeit misst, und eine Messeinheit (24, 241), die Positionsinformation misst, aufweist, und eine Informationsvorrichtung (3A, 3B), die mit der Messvorrichtung (2) kommuniziert, aufweist, wobei das Verfahren die folgenden Schritte umfasst:
a) Erzeugen von Detailinformation, die Positionsinformation enthält;
b) Speichern der Detailinformation in der Speichereinheit (25);
c) Erzeugen von Titelinformation zum Identifizieren der Detailinformation;
d) Übertragen der Titelinformation zu der Informationsvorrichtung (3A);
e) Berechnen einer geschätzten Übertragungszeit, die zum Übertragen der Detailinformation, die der von der Messvorrichtung (2) übertragenen Titelinformation entspricht, von der Messvorrichtung (2) zu der Informationsvorrichtung (3A) notwendig ist;
f) Bestimmen, ob oder ob nicht die geschätzte Übertragungszeit kürzer ist als ein im Voraus gesetzter vorbestimmter Schwellenwert;
g) Übertragen eines Übertragungsanfragesignals der Detailinformation, von der die geschätzte Übertragungszeit bestimmt wird, kürzer zu sein als der beim Bestimmen der geschätzten Übertragungszeit vorbestimmte Schwellenwert, zu der Messvorrichtung (2); und
h) Übertragen der Detailinformation zu der Informationsvorrichtung (3A) gemäß dem von der Informationsvorrichtung (3A) übertragenen Übertragungsanfragesignal.

14. Messinformationsverwaltungsprogramm, das eine Informationsvorrichtung (3A), die mit einer Messvorrichtung (2), die eine Takteinheit (271), die die Zeit misst, und eine Messeinheit (24, 241), die zumindest eine Positionsinformation misst, aufweist, kommuniziert, dazu veranlasst, die folgenden Schritte auszuführen:
a) Berechnen einer geschätzten Übertragungszeit, die zum Übertragen von Detailinformation, die der Titelinformation entspricht, von der Messvorrichtung (2) zu der Informationsvorrichtung (3A) notwendig ist, wenn die Titelinformation zum Identifizieren der Detailinformation, die zumindest die Positionsinformation aufweist, von der Messvorrichtung (2) empfangen wird;
b) Bestimmen, ob oder ob nicht die geschätzte Übertragungszeit kürzer ist als ein vorbestimmter Schwellenwert, der im Voraus gesetzt ist;
c) Übertragen eines Übertragungsanfragesignals der Detailinformation, von der die geschätzte Übertragungszeit bestimmt ist, kürzer zu sein als der beim Bestimmen der geschätzten Übertragungszeit vorbestimmte Schwellenwert, zu der Messvorrichtung (2); und
d) Empfangen der beim Übertragen des Übertragungsanfragesignals angefragten Detailinformation von der Messvorrichtung (2).

## Revendications

1. Dispositif de mesure (2) qui communique avec un dispositif d'information (3A, 3B), le dispositif de mesure (2) comprenant :
a0) une unité de stockage (25),
a1) une unité d'horloge (271) qui mesure le temps,
a2) une unité de mesure (24 ; 241) qui mesure des informations de position,
a3) une unité de génération d'informations de détail (273) qui génère des informations de détail incluant les informations de position,
a4) une unité de génération d'informations de titre (274, 274A) qui génère des informations de titre pour identifier les informations de détail, et
a5) une unité de transmission d'informations de détail (273) qui transmet les informations de détail au dispositif d'information (3A) selon un signal de demande de transmission, lorsque le signal de demande de transmission des informations de détail, dont le temps de transfert estimé nécessaire pour la transmission des informations de détail au dispositif d'information (2) est déterminé être plus court qu'une valeur seuil prédéterminée réglée à l'avance, est reçu.

2. Dispositif d'information (3A) qui communique avec un dispositif de mesure (2), le dispositif d'information (3A) comprenant :
b1) une unité de calcul de temps de transfert (352) qui calcule un temps de transfert estimé nécessaire pour la transmission des informations de détail, correspondant aux informations de titre transmises par le dispositif de mesure (2), du dispositif de mesure (2) au dispositif d'information (3A),
b2) une unité de détermination de temps de transfert (358) qui détermine si le temps de transfert estimé est plus court ou non qu'une valeur seuil prédéterminée réglée à l'avance,
b3) une unité de demande d'informations de détail (354) qui délivre en sortie un signal de demande de transmission des informations de détail dont le temps de transfert estimé est déterminé être plus court que la valeur seuil prédéterminée par l'unité de détermination de temps de transfert (358), et
b4) une unité de transmission (34) qui transmet le signal de demande de transmission des informations de détail au dispositif de mesure (2).

3. Système de gestion d'informations de mesure, comprenant :
i) un dispositif de mesure (2) selon la revendication 1 ; et
ii) un dispositif d'information (3A) qui communique (1A) avec le dispositif de mesure (2), le dispositif d'information (3A) étant configuré selon la revendication 2.

4. Système de gestion d'informations de mesure selon la revendication 2 ou 3,
dans lequel l'unité de calcul de temps de transfert (352) calcule le temps de transfert estimé sur la base d'un volume de données des informations de détail et d'une vitesse de communication réglée à l'avance.

5. Système de gestion d'informations de mesure selon la revendication 2 ou 3,
dans lequel l'unité de calcul de temps de transfert (352) calcule le temps de transfert estimé sur la base d'un volume de données des informations de détail et d'une vitesse de communication mesurée lorsque les informations de titre sont transmises du dispositif de mesure (2) au dispositif d'information (3A).

6. Système de gestion d'informations de mesure selon la revendication 3, comprenant en outre :
un serveur (4) qui communique avec le dispositif d'information (3B), dans lequel
ladite unité de calcul de temps de transfert (356) est en outre adaptée pour calculer un temps de transfert estimé nécessaire pour la transmission des informations de détail correspondant aux informations de titre transmises par le dispositif de mesure (2), du dispositif de mesure (2) au serveur (4) par le biais du dispositif d'information (3B), et comprenant en outre :
une unité de réception (34) qui reçoit les informations de détail transmises par le dispositif de mesure (2) selon le signal de demande de transmission des informations de détail, et
une unité de transfert d'informations de détail (357) qui transfère les informations de détail reçues au serveur (4).

7. Système de gestion d'informations de mesure selon la revendication 6,
dans lequel l'unité de calcul de temps de transfert (356) calcule le temps de transfert estimé sur la base d'une vitesse de communication réglée à l'avance.

8. Système de gestion d'informations de mesure selon la revendication 6,
dans lequel l'unité de calcul de temps de transfert (356) calcule le temps de transfert estimé sur la base d'une valeur de mesure d'une vitesse de communication.

9. Système de gestion d'informations de mesure selon l'une quelconque des revendications 3 à 8,
dans lequel le dispositif d'information (3A, 3B) inclut une unité d'affichage (31),
une unité de commande d'affichage (353) qui affiche les informations de titre transmises par le dispositif de mesure (2) sur l'unité d'affichage (31), et
une unité d'entrée (32) qui détermine qu'une opération de sélection et une opération de transfert des informations de titre devant être une cible de transfert à partir des éléments d'informations de titre affichés sur l'unité d'affichage (31) sont réalisées et délivre un signal d'opération, et
l'unité de demande d'informations de détail (354) transmet le signal de demande de transmission des informations de détail, correspondant aux informations de titre sélectionnées selon le signal d'opération délivré en sortie par l'unité d'entrée (32), au dispositif de mesure (2).

10. Système de gestion d'informations de mesure selon l'une quelconque des revendications 3 à 9,
dans lequel le dispositif de mesure (2) inclut une unité d'entrée côté dispositif de mesure (23) qui détermine que l'opération de début et l'opération de fin de la mesure sont réalisées et délivre en sortie un signal de début de mesure et un signal de fin de mesure à l'unité de mesure (24),
l'unité de génération d'informations de détail (273) génère un élément d'informations de détail incluant au moins les informations de position mesurées par l'unité de mesure (24) depuis un point temporel lorsque le signal de début de mesure est délivré en sortie jusqu'à un point temporel lorsque le signal de fin de mesure est délivré en sortie, et des informations de temps qui sont le temps lorsque les informations de position sont mesurées, et
l'unité de génération d'informations de titre (274A) génère des informations de titre incluant un temps écoulé depuis un point temporel lorsque le signal de début de mesure est délivré en sortie jusqu'à un point temporel lorsque le signal de fin de mesure est délivré en sortie, une distance de mouvement du dispositif de mesure (2), et des informations de date du point temporel lorsque le signal de début de mesure ou le signal de fin de mesure est délivré en sortie.

11. Système de gestion d'informations de mesure selon l'une quelconque des revendications 3 à 10,
dans lequel le dispositif de mesure (2) inclut en outre
une unité de génération d'informations de résumé (274) qui génère des informations de résumé représentant un résumé des informations de détail, et
une unité de transmission d'informations de résumé (276) qui transmet les informations de résumé au dispositif d'information (3A, 3B),
les informations de résumé incluent les informations de titre,
l'unité de génération d'informations de résumé (274) inclut l'unité de génération d'informations de titre, et
l'unité de transmission d'informations de résumé (276) inclut une unité de transmission d'informations de titre qui transmet les informations de titre au dispositif d'information (3A, 3B).

12. Système de gestion d'informations de mesure selon l'une quelconque des revendications 3 à 11,
dans lequel le dispositif d'information (3A, 3B) inclut
une unité d'entrée (32) qui détermine qu'une opération de réglage consistant à régler une valeur seuil est réalisée et délivre en sortie un signal d'opération, et
une unité de réglage de valeur seuil (359) qui règle une valeur de la valeur seuil prédéterminée selon le signal d'opération délivré en sortie par l'unité d'entrée (32).

13. Procédé de gestion d'informations de mesure d'un système de gestion d'informations de mesure incluant un dispositif de mesure (2) incluant une unité de stockage (25), une unité d'horloge (271) qui mesure le temps, et une unité de mesure (24, 241) qui mesure des informations de position, et un dispositif d'information (3A, 3B) qui communique avec le dispositif de mesure (2), le procédé comprenant les étapes suivantes :
a) la génération d'informations de détail incluant les informations de position ;
b) le stockage des informations de détail dans l'unité de stockage (25) ;
c) la génération d'informations de titre pour identifier les informations de détail ;
d) la transmission des informations de titre au dispositif d'information (3A) ;
e) le calcul d'un temps de transfert estimé nécessaire pour la transmission des informations de détail correspondant aux informations de titre transmises par le dispositif de mesure (2) du dispositif de mesure (2) au dispositif d'information (3A) ;
f) la détermination que le temps de transfert estimé est plus court ou non qu'une valeur seuil prédéterminée réglée à l'avance ;
g) la transmission d'un signal de demande de transmission des informations de détail, dont le temps de transfert estimé est déterminé être plus court que la valeur seuil prédéterminée dans la détermination du temps de transfert estimé, au dispositif de mesure (2) ; et
h) la transmission des informations de détail au dispositif d'information (3A) selon un signal de demande de transmission transmis par le dispositif d'information (3A).

14. Programme de gestion d'informations de mesure amenant un dispositif d'information (3A), qui communique avec un dispositif de mesure (2) incluant une unité d'horloge (271) qui mesure le temps et une unité de mesure (24, 241) qui mesure au moins des informations de position, à exécuter les étapes suivantes :
a) le calcul d'un temps de transfert estimé nécessaire pour la transmission d'informations de détail correspondant aux informations de titre du dispositif de mesure (2) au dispositif d'information (3A), lorsque les informations de titre pour identifier les informations de détail incluant au moins les informations de position sont reçues en provenance du dispositif de mesure (2) ;
b) la détermination que le temps de transfert estimé est plus court ou non qu'une valeur seuil prédéterminée réglée à l'avance;
c) la transmission d'un signal de demande de transmission des informations de détail, dont le temps de transfert estimé est déterminé être plus court que la valeur seuil prédéterminée dans la détermination du temps de transfert estimé, au dispositif de mesure (2) ; et
d) la réception des informations de détail demandées dans la transmission du signal de demande de transmission, en provenance du dispositif de mesure (2).
